Europäisches Patentamt

European Patent Office

Office européen des brevets

(11) Publication number: **0 021 639**
**B1**

(12) **EUROPEAN PATENT SPECIFICATION**

(45) Date of publication of patent specification: **30.12.86**

(51) Int. Cl.⁴: **G 01 F 3/22**

(21) Application number: **80301846.4**

(22) Date of filing: **03.06.80**

(54) **Dry gas meter and method of assembling a flag rod.**

(30) Priority: **09.06.79 GB 7920155**

(43) Date of publication of application:
**07.01.81 Bulletin 81/01**

(45) Publication of the grant of the patent:
**30.12.86 Bulletin 86/52**

(84) Designated Contracting States:
**AT BE DE FR GB IT NL SE**

(56) References cited:
**GB-A-1 142 601**
**GB-A-1 165 151**
**US-A-2 741 122**
**US-A-4 014 212**

(73) Proprietor: **UNITED GAS INDUSTRIES LIMITED**
**3-4, Bentinck Street**
**London W1M 6DH (GB)**

(72) Inventor: **Pye, Alfred Edward**
**20, Selbourne Avenue**
**Tolworth, Surrey (GB)**

(74) Representative: **Betteridge, Eileen Margaret**
**170, Rowan Road**
**Streatham Vale London, SW16 5JE (GB)**

Courier Press, Leamington Spa, England.

**Description**

This invention relates to gas meters of the kind in which a gas chamber is divided by a flexible diaphragm and gas is admitted alternately to either side of the diaphragm whereby the diaphragm reciprocates back and forth. The reciprocating movements are used to measure the volume of gas flowing and are transmitted from the gas chamber via a flag rod assembly.

Flag rod assemblies, for instance as shown in U.K. patent No. 1,058,751, have usually comprised a cranked rod one end of which is attached to the diaphragm and the other extends out of the gas chamber. Such cranked rods are difficult to manufacture accurately and also to assemble. A flag rod assembly is also shown in U.K. patent No. 1,165,151, which has a straight flag rod secured to a flag pivoted to the diaphragm. A similar flag rod assembly is shown in U.K. patent No. 1,142,601, which has a flag rod seated in a footstep bearing in the gas chamber.

The invention provides a method of assembling a gas meter flag rod assembly into a gas chamber (11, 12) divided by a flexible diaphragm (13) the assembly being of the kind comprising a flag (22) secured at one end to the diaphragm with freedom to pivot with respect thereto about a first axis and a straight flag rod (24) fixed to the flag (22), one end of which flag rod extends out of the gas chamber, characterized by the method comprising the steps of first securing the flag (22) to the flag rod (24), pivotally attaching the flag (22) to the diaphragm (13), moving the flag out of its normal arc of movement relative to the diaphragm, and passing said one end of the flag rod (24) through an opening in the gas chamber, dropping the other end of the flag rod down through a bearing (31) to contact an end stop (30) limiting movement of the flag rod in one sense and rotating the flag back into its normal arc of movement thereby engaging the flag under a shoulder (32) limiting movement of the flag rod in the opposite sense.

The structure for carrying out the method according to the invention provides a gas meter of the kind in which a gas chamber is divided by a flexible diaphram and gas is admitted alternately to either side of the diaphragm whereby the diaphragm is moved back and forth, which movements are transmitted through a flag rod assembly to measure the volume of gas flowing, said flag rod assembly including a flag secured at one end to the diaphragm with freedom to pivot with respect thereto about a first axis, said flag having its other end fixed to a straight flag rod which is mounted at one end in the gas chamber with freedom to oscillate about its own axis which is parallel to but spaced from said first axis, the other end of the flag rod extending out of the gas chamber, whereby the back and forth movements of the diaphragm are translated into oscillations of the flag and flag rod through an arc about the flag rod axis, and the mounting for the flag rod in the gas chamber comprising an end stop for said one end limiting endwise movement of the flag rod in one direction, a bearing opening through which the flag rod passes and characterized by a shoulder which in use is contacted by the flag to limit endwise movement of the flag rod in the opposite direction. Said shoulder may be located to be contacted by the flag only in that arc of pivotal positions of the flag which is encountered in use, so that the flag rod assembly may be assembled with the flag rotated out of said arc and thereby free of the constraint of said shoulder.

A specific embodiment of the invention is shown in the accompanying drawings, in which:—

Figure 1 is an exploded view of part of a gas meter showing a diaphragm and one of its flag rod assemblies with an inset of part thereof enlarged, and

Figure 2 is a detail view of another flag rod assembly for the gas meter of Figure 1.

The gas meter includes a pair of dished pans (11, 12) clamped together to form a gas chamber with a diaphragm (13) of a flexible fabric held therebetween. Valves (not shown) admit gas alternately to either side of the diaphragm and then exhaust it so that the diaphragm is moved back and forth in the chamber, the number of such movements being a measure of gas flowing through the chamber.

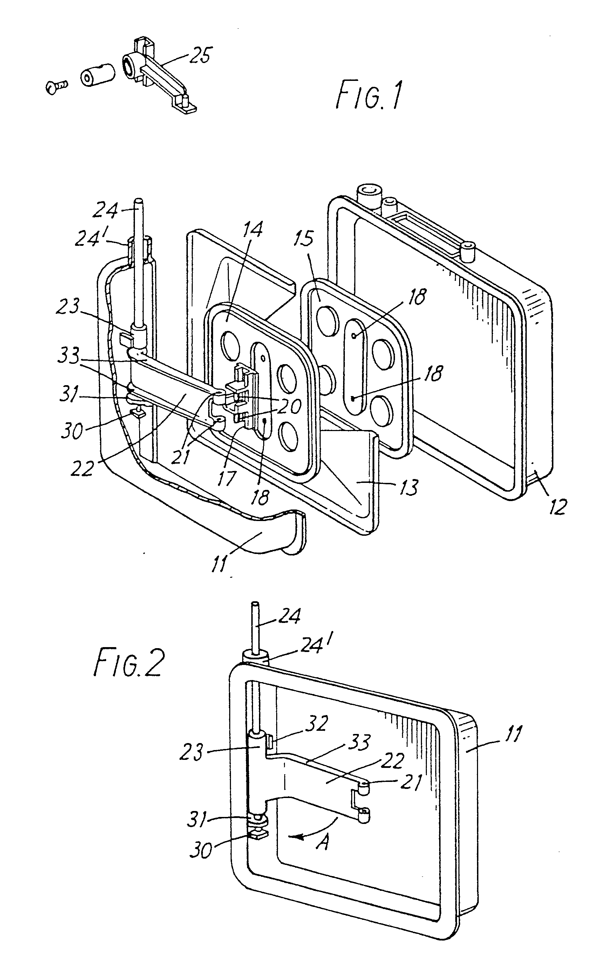

Referring first to Figure 1, centrally of the diaphragm are a pair of flat metal plates (14, 15) one on either side of the diaphragm. The plates are secured to the diaphragm by a bracket member (17) of acetal plastics material which has a pair of pins which pass through aligned openings (18) in the plates and can be ultrasonically welded thereto, or conventionally screwed or rivetted.

Bracket member (17) provides a pair of vertically spaced pins (20) which engage in openings (21) in one end of a flag (22) to allow the flag to rotate about a vertical axis relative to the diaphragm as the diaphragm reciprocates. The other end of flag (22) terminates in a sheath (23) in which a straight metal flag rod (24) is tightly fitted i.e. fixed. The flag rod extends through a vertical opening (24') in the pan (11) and has a flag arm (25) secured thereto. The flag arm drives a valve opening mechanism (not shown) and an index (not shown).

The gas meter also includes another gas chamber of opposite hand to that shown in Figure 1 but otherwise identical. The flag rod assembly shown in Figure 2 is that of this second gas chamber and so shows the flag rod assembly from an opposed angle. It has the same reference numerals as that of Figure 1.

The pans (11) for both chambers are formed with mountings allowing the flag rod freedom to oscillate about a vertical axis and also to be quickly assembled into the pans. The mountings comprise an end stop (30), a bearing (31) and a shoulder (32) which lies adjacent the sheath (23). To assemble it, the flag rod is secured to the flag (22), and its upper end fed up into the opening (24') until the lower end can be dropped into the bearing (31). It will be found that this assembling action can only perform with the flag (22) rotated out of the pan in the direction of arrow A, since the flag has ridges (seen best in Figure 1) which contact the shoulder (32) and prevent the flag rod (24) being aligned with bearing (31). The flag rod is dropped into contact with end stop (30), which action drops the ridges out of alignment with the shoulder (32). The flag (22) can then be rotated in the opposite direction to arrow A into the position shown in Figure 2, where shoulder (32) abuts the top edge of the flag and locks the flag so preventing the flag rod being lifted out of its bearing (31). The normal reciprocation of diaphragm (13) moves the flag (22) through a restricted arc of movement in which it is never rotated sufficiently in the direction of arrow A to allow the flag to move out of contact with shoulder (32). The flag rod and flag are therefore locked between the lower end stop (30) and the upper shoulder (32).

In assembly and disassembly when the dished pans (11, 12) are not joined together the diaphragms can be moved further than their normal reciprocating motion so allowing the additional movement of the flag necessary to clear the shoulder (32). When the pans are secured together, however, the diaphragm movement is restricted and the flag cannot clear the shoulder.

It will be noted that this form of assembly depends on the flag rod being a simple straight rod which can be threaded through the various openings. The rod may be formed of a metal while the other parts are mouldings of a plastics material, e.g. acetal. Where the pans (11, 12) are formed of moulded acetal material, the end stop (30), shoulder (32) and bearing (31) are moulded integrally therewith. Alternatively they may be secured thereto with adhesive.

**Claims**

1. A method of assembling a gas meter flag rod assembly into a gas chamber (11, 12) divided by a flexible diaphragm (13) the assembly being of the kind comprising a flag (22) secured at one end to the diaphragm with freedom to pivot with respect thereto about a first axis and a straight flag rod (24) fixed to the flag (22), one end of which flag rod extends out of the gas chamber, characterized by the method comprising the steps of first securing the flag (22) to the flag rod (24), pivotally attaching the flag (22) to the diaphragm (13), moving the flag out of its normal arc of movement relative to the diaphragm and passing said one end of the flag rod (24) through an opening in the gas chamber, dropping the other end of the flag rod down through a bearing (31) to contact an end stop (30) limiting movement of the flag rod in one sense and rotating the flag back into its normal arc of movement thereby engaging the flag under a shoulder (32) limiting movement of the flag rod in the opposite sense.

2. A gas meter of the kind in which a gas chamber (11, 12) is divided by a flexible diaphragm (13) and gas is admitted alternately to either side of the diaphragm whereby the diaphragm is moved back and forth, which movements are transmitted through a flag rod assembly (22, 24, 25) to measure the volume of gas flowing, said flag rod assembly including a flag (22) secured at one end to the diaphragm with freedom to pivot with respect thereto about a first axis, said flag (22) having its other end fixed to a straight flag rod (24) which is mounted at one end in the gas chamber with freedom to oscillate about its own axis which is parallel to but spaced from said first axis, the other end of the flag rod extending out of the gas chamber, whereby the back and forth movements of the diaphragm are translated into oscillations of the flag and flag rod through an arc about the flag rod axis, and the mounting for the end of the flag rod in the gas chamber comprising an end stop (30) limiting endwise movement of the flag rod in one direction, a bearing (31) through which the flag rod passes and characterized by a shoulder (32), which shoulder is located so that it acts as a stop preventing movement of said flag and flag rod in a direction opposite to said one direction only in said arc of movement of the flag and flag rod, whereby for assembly and disassembly purposes the flag may be rotated out of said arc of movement to clear said shoulder and leave the flag rod free to be moved in said opposite direction whereby to allow the method of assembly claimed in claim 1 to be carried out.

3. A gas meter as claimed in claim 2, further characterized by said flag (22) being formed with a ridge located to contact said shoulder in said arc of movement.

4. A gas meter as claimed in claim 2 or claim 3, further characterized by said end stop (30) said bearing (31) and said shoulder (32) being integral with or secured to the interior surface of said gas chamber.

5. A gas meter as claimed in any of claims 2 to 4, further characterized by said arc of movement being limited by the end surfaces of the gas chamber (11, 12) whereby said flag (22) cannot be rotated out of said arc of movement when the chamber is assembled.

**Patentansprüche**

1. Eine Methode des Einbaus einer Gaszähler-Anstoßstangen-Anordnung innerhalb einer Gaskammer (11, 12), abgeteilt durch eine flexible Blende (13). Die Einbau-Anordnung ist derart, daß sie einen Anstoß (22) enthält, der an einem Ende an der Blende mit Bewegungsfreiheit zum Drehen um eine erste Achse befestigt ist, und eine gerade Anstoßstange (24), die am Anstoß befestigt ist; ein Ende dieser Anstoßstange ragt aus der Gaskammer heraus und ist charakterisiert durch die Methode, die folgende Stufen umfaßt: Zunächst wird der Anstoß (22) an der Anstoßstange (24) befestigt, der Anstoß (22) gemäß dem Drehpunkt an der Blende (13) angebracht, der Anstoß aus seinem normalen Bewegungsbogen entsprechend der Blende herausgeführt und das genannte eine Ende der Anstoßstange (24) durch eine Öffnung in der Gaskammer gegeben, das andere Ende der Anstoßstange durch ein Lager (31) herunterfallen gelassen, um Berührung mit einem Endanschlag (30) zu bewirken, wodurch einerseits die Bewegung der Anstoßstange beschränkt und der Anstoß in seinen normalen Bewegungsbogen zurückgeführt wird und dadurch unter einem Ansatz einrastet, so daß die Bewegung der Anstoßstange im entgegengesetzten Sinne beschränkt wird.

2. Ein Gaszähler der Art, bei dem eine Gaskammer (11, 12) durch eine flexible Blende (13) abgeteilt und Gas abwechselnd jeder Seite der Blende zugeführt wird, wodurch die Blende hin- und herbewegt wird. Diese Bewegungen werden durch eine Anstoßstangen-Anordnung (22, 24, 25) übertragen, um die durchströmende Gasmenge zu messen. Die genannte Anstoßstangen-Anordnung schließt einen Anstoß (22) ein, der an einem Ende der Blende mit entsprechender Bewegungsfreiheit um eine erste Achse befestigt ist, während das andere Ende des genannten Anstoßes (22) an einer geraden Anstoßstange (24) angebracht ist, die an einem Ende der Gaskammer mit Bewegungsfreiheit zum Drehen um die eigene Achse montiert ist, welche sich parallel, jedoch mit Zwischenraum, entfernt von der genannten ersten Achse befindet. Das andere Ende der Anstoßstange ragt aus der Gaskammer heraus, wodurch die Hin- und Zurückbewegung der Blende in Schwenkungen des Anstoßes verwandelt und die Anstoßstange im Bogen um die Anstoßstangen-Achse geführt werden. Die Montage-Anordnung für das Ende der Anstoßstange in der Gaskammer enthält einen Endanschlag (30), der die Endbewegung der Anstoßstange in einer Richtung beschränkt, ein Lager (31) durch welches die Anstoßstange führt, charakterisiert durch einen Ansatz (32), der so vorgesehen ist, daß er als eine Sperre wirkt, wodurch die Bewegung des genannten Anstoßes und de Anstoßstange in einer entgegengesetzten Richtung zur genannten Richtung nur bei der genannten Bogenbewegung des Anstoßes und der Anstoßstange bewirkt, in welchem Falle für Einbau- und Ausbauzwecke der Anstoß aus dem genannten Bewegungsbogen herausrotiert werden kann, um am Ansatz vorbeizukommen, wodurch es der Anstoßstange ermöglicht wird, in die genannte entgegengesetzte Richtung bewegt zu werden. Dadurch wird es ermöglicht, die Einbaumethode entsprechend Patentanspruch 1 durchzuführen.

3. Ein Gaszähler wie unter Patentanspruch 2, der weiterhin dadurch charackterisiert ist, daß der genannte Anstoß (22) mit Riefen versehen ist, um eine Berührung mit dem genannten Ansatz bei der genannten Bogenbewegung zu ermöglichen.

4. Ein Gaszähler wie unter Patentanspruch 2 oder 3, der weiterhin dadurch charakterisiert ist, daß der genannte Ansatz (32) integral mit der inneren Oberfläche der genannten Gaskammer vorgesehen ist oder an dieser befestigt wird.

5. Ein Gaszähler wie unter Patentanspruch 2 oder 4, der weiterhin durch den genannten Bewegungsbogen charackterisiert ist, der durch die Endflächen der Gaskammer (11, 12) limitiert wird, wodurch der genannte Anstoß (22) nicht aus dem genannten Bewegungsbogen ausrotiert werden kann, wenn die Kammer zusammengebaut ist.

**Revendications**

1. Méthode d'assemblage de l'ensemble tige d'indicateur de compteur dans la chambre à gaz (11, 12) divisée par un diaphragme souple (13), l'ensemble se composant d'un indicateur (22) fixé à une extrémité du diaphragme et libre de pivoter sur un premier axe, et d'une tige d'indicateur droite (24) fixée sur l'indicateur (22), dont une extrémité se prolonge hors de la chambre à gaz, et caractérisée par une méthode prévoyant tout d'abord le montage de l'indicateur (22) sur la tige d'indicateur (24), suivie du montage pivotant de l'indicateur (22) sur le diaphragme (13). L'indicateur doit ensuite être écarté de son arc de mouvement normal par rapport au diaphragme (13), et ladite extrémité de la tige d'indicateur (24) doit passer par une ouverture dans la chambre à gaz, tandis que l'autre extrémité de la tige indicateur doit traverser un roulement (31) pour venir se heurter à un butoir d'extrémité (30) limitant le mouvement de la tige d'indicateur dans un sens. L'indicateur doit ensuite pouvoir reprendre son arc de mouvement normal pour s'engager sous un épaulement (32) limitant le mouvement de la tige d'indicateur en direction opposée.

2. Compteur de type à chambre à gaz (11, 12) divisé en deux sections par un diaphragme souple (13), le gaz étant admis tour à tour d'un côté ou de l'autre du diaphragme pour donner à ce dernier un mouvement de va-et-vient qui est transmis, par l'ensemble tige d'indicateur (22, 24, 25), pour mesurer le volume de gaz débité, ledit ensemble tige d'indicateur comprenant un indicateur (22) fixé à l'une des extrémités du diaphragme et pouvant pivoter librement sur un premier axe, l'autre extrémité dudit indicateur (22) étant fixée à la tige d'indicateur rectiligne (24) montée à une extrémité de la chambre à gaz et pouvant osciller librement sur son propre axe, qui est parallèle audit premier axe et éloigné de ce dernier, l'autre extrémité de la tige d'indicateur se prolongeant hors de la chambre à gaz, de façon à ce que les mouvements de va-et-vient du diaphragme soient convertis en oscillations de l'indicateur et de la tige d'indicateur sur un arc de l'axe de la tige d'indicateur, et le support de l'extrémité de la tige d'indicateur dans la chambre à gaz se composant d'un butoir (30) limitant le mouvement final de la tige d'indicateur dans une direction, un palier (31) que traverse la tige d'indicateur et caractérisé par un épaulement (32), situé de façon à empêcher l'arrêt du mouvement desdits indicateur et tige d'indicateur dans une direction opposée à la dite direction uniquement dudit arc de mouvement de l'indicateur et de la tige d'indicateur, permettant de faire sortir l'indicateur dudit axe de mouvement pour dégager ledit épaulement à des fins de montage et de démontage, et pouvoir déplacer librement la tige d'indicateur dans ladite direction opposée pour permettre de réaliser la méthode de montage revendiquée dans la revendication 1.

3. Une chambre à gaz comme revendiqué en seconde revendication, caractérisée, en outre, par ledit indicateur (22) formé d'une arête située de façon à entrer en contact avec ledit épaulement dans ledit arc de mouvement.

4. Un compteur de gaz comme revendiqué en seconde ou troisième revendication, caractérisé, en outre, par ledit butoir d'extrémité (30), ledit palier (31) et ledit épaulement (32) formant partie intégrante de la surface interne dela dite chambre à gaz ou fixés sur cette dernière.

5. Un compteur de gaz comme revendiqué en revendications 2 à 4, caractérisé, en outre, par la limitation dudit arc de mouvement grâce aux surfaces d'extrémité de la chambre à gaz (11, 12), empêchant ainsi ledit indicateur (22) de sortir dudit arc de mouvement au moment de l'assemblage de la chambre.

FIG.1

FIG.2